# EUROPEAN PATENT APPLICATION

(11) **EP 3 998 209 A1**
(43) Date of publication of application: **18.05.2022**
(21) Application number: 21161124.9
(22) Date of filing: 05.03.2021
(51) Int. Cl.: B64C 29/00, B64C 11/00, B64C 11/30, F02K 1/06

(54) **WING AND ENGINE STRUCTURE FOR A VERTICAL TAKE-OFF AND LANDING AIRCRAFT**

(71) Applicant: Lilium eAircraft GmbH, 82234 Wessling (DE)
(72) Inventor: WIEGAND, Daniel, 81667 München (DE)
(74) Representative: Feller, Frank

(57) **Abstract**

The present invention provides a wing structure for a vertical take-off and landing aircraft (10), comprising a wing (16) and at least two engines (18), each engine of the two engines being mounted to the wing (16) such as to be movable between a hover position with vertical thrust direction and a cruise position with horizontal thrust direction, wherein one of the two engines is mounted to a leading edge (22) of the wing and the other one of the two engines is mounted to a trailing edge (24) of the wing.

## Description

The present invention relates to a vertical take-off and landing aircraft (VTOL aircraft), comprising a wing structure with at least one wing and a plurality of engines attached to the wing. Furthermore, the invention relates to a wing structure for a VTOL aircraft, which carries a plurality of engines.

VTOL aircrafts have attracted much attention in research and development over the past decades for their capabilities of starting and landing on a limited area. In order to use the aerodynamic lift during forward flight for increased efficiency and range, tiltable engines have been proposed for VTOL aircrafts, which are mounted to the aircraft such as to be pivotable between a hover position with vertical thrust direction for takeoff and landing and a cruise position with horizontal thrust direction for forward flight. An example for a VTOL aircraft is disclosed in US 10,570,926 B2 and comprises two engines pivotable between hover position and cruise position. In order to arrange the engines symmetrically with respect to the center of gravity of the aircraft in forward direction, the two engines are mounted to the tip ends of the wings, respectively. Such configuration has disadvantages with respect to safety in case of a failure of one of the engines, because balance of the aircraft will be lost, in particular during hovering.

In addition, since conventional fossil fuel powered engines are known to have high complexity, high noise level and other disadvantages with regard to efficiency and environmental impact, it has been proposed to use electric engines for aircraft propulsion.

Based on the above-mentioned constraints, a VTOL aircraft has been proposed in US 10,597,133 B2, which uses a first pair of wings mounted to a front part of the fuselage and carrying a plurality of front engines, and a second pair of wings mounted to a rear part of the fuselage and carrying a plurality of rear engines. In this manner, the engines may be distributed before and behind the center of gravity of the aircraft to provide sufficient stability during hovering, while the two pairs of wings support stable forward flight. However, this configuration is limited to a structure having two pairs of wings or it requires a plurality of pivotable engines close to the cockpit of the aircraft.

In view of this background, it was an object of the present invention to overcome the problems of the prior art and to provide a VTOL aircraft and a wing structure for a VTOL aircraft, wherein engine noise and footprint of the aircraft is reduced while maintaining economic and safe operation both during hovering and during cruise flight.

According to a first aspect of the present invention, this object is achieved by a wing structure for a vertical take-off and landing aircraft, comprising a wing and two engines, each engine being mounted to the wing such as to be movable, preferably pivotable, between hover position with vertical thrust direction and a cruise position with horizontal thrust direction, wherein one of the two engines is mounted adjacent to a leading edge of the wing and the other one of the two engines is mounted adjacent to a trailing edge of the wing. By mounting the engines to the leading edge and the trailing edge of the wing, respectively, the engines are capable of balancing the wing with respect to the heading direction (forward direction). Therefore, when mounting a wing structure according to the invention to an aircraft at a position near or at the center of gravity of the aircraft with respect to the heading direction, the engines will be capable of maintaining balance of the aircraft during hovering. In particular, it will not be necessary to install additional engines in other parts of the fuselage or at separate wings just for establishing balance during hovering. However, such additional engines may nevertheless be provided to achieve redundancy of propulsion, additional lift, flexibility or other advantages.

The engine mounted adjacent to the leading edge of the wing may be mounted at the leading edge of the wing or may be mounted such that at least in the hover position the engine is located closer to the leading edge than to the trailing edge, preferably closer to the leading edge than to a wing center in heading direction X. Likewise, the engine mounted adjacent to the trailing edge of the wing may be mounted at the trailing edge of the wing or may be mounted such that at least in the hover position the engine is located closer to the trailing edge than to the leading edge, preferably closer to the trailing edge than to a wing center in heading direction X.

Preferably, in cruise position, one of the two engines is positioned below the wing and the other one of the two engines is positioned above the wing. With this configuration, interference between the air streams of the two engines can be avoided and both engines can be operated with full efficiency during cruise flight.

In another embodiment of the invention, when moving the engines from the hover position to the cruise position, one of the two engines may be lifted upwardly and the other of the two engines may be lowered.

According to a further preferred embodiment of the invention, both engines are positioned substantially at the same distance from the fuselage of the aircraft or at the same distance from a vertical median plane of the aircraft, which is an XZ plane extending vertically and in the heading direction X of the aircraft, and which includes the center of gravity of the aircraft. Such a configuration of engines supports a symmetric arrangement of the engines around the center of gravity as viewed in a projection into a horizontal plane, i.e. as effective during hovering. For example, a wing structure of this type may be used for an aircraft having at least four engines (two on the left wing and two on the right wing), which are disposed at the corners of a rectangle when projected in a horizontal plane, wherein the center of gravity of the aircraft may then be disposed in a middle region or in a center of the rectangle, for example. Especially, such configuration can be established with only one pair of wings, for example the main wings in a conventional aircraft design.

In a further preferred embodiment of the present invention, the two engines form a first pair of engines, and the wing structure further comprises at least one additional pair of engines mounted to the same wing as the first pair of engines, wherein each additional pair of engines is configured in the same or corresponding manner as said first pair of engines. Providing at least one additional pair of engines has the advantage of achieving a redundancy as regards balancing of the aircraft in hover mode. In particular, in an aircraft having left and right wings each provided with two pairs of engines as described above, in case of a failure of one of the engines, it is possible to purposely switch off an engine disposed diametrically opposed to the failed engine with respect to the center of gravity. The additional thrust required due to the engine failure can thus be provided at equal shares by the remaining engines, which are kept operative. An overload of one of the engines for regaining balance can thus be avoided.

Preferably, the engines used in the wing structure of the present invention are electric ducted fans, for achieving advantages with respect to low noise, contained blades, low footprint and low vibration. Electric engines are to be preferred for ecological reasons as well.

In a further preferred embodiment of the invention, each engine comprises a rotor, a stator and at least one baffle member movable with respect to both the rotor and the stator, such as to move between a hover configuration and a cruise configuration, wherein the engine comprises at least one of a baffle member configured as a blade of the rotor which is provided at an intake portion of the engine and a baffle member configured as a variable area exhaust nozzle which is provided at an outlet portion of the engine. The baffle member allows changing the aerodynamic behavior of the engine in order to adapt the engine operation to the requirements during hovering on the one hand and during cruise flight on the other hand. In particular, by moving the baffle member between hover configuration and cruise configuration, the static pressure inside the engine may be adjusted in order to run the engine at substantially equal operating points and/or flow conditions during hovering and during cruise flight.

According to a second aspect of the present invention, there is provided a vertical takeoff and landing aircraft (VTOL aircraft), comprising a wing structure according to the first aspect of the present invention, wherein, with respect to the heading direction X of the aircraft, the engine mounted adjacent to the leading edge of the wing is positioned in front of the center of gravity of the aircraft, and the engine mounted adjacent to the trailing edge of the wing is positioned behind the center of gravity of the aircraft. Therefore, because of the arrangement of the engines with respect to the center of gravity, the VTOL aircraft according to the second aspect of the invention may achieve the advantages as described above for the first aspect of the invention. In particular, if the wing is mounted to the fuselage of the aircraft at a position at or near the center of gravity with respect to a heading direction X of the aircraft, the engines mounted on the leading edge and the trailing edge of the wing, respectively, will be able to balance the aircraft during hovering. Additional engines at other parts of the aircraft, such as at the fuselage or at additional wings, are not necessary for balancing but may be provided to achieve additional functions or advantages, such as redundancy.

Preferably, the VTOL aircraft of the present invention may comprise at least six engines. This allows a sufficient level of redundancy of operation, in particular during hovering, because in case of a failure of one of the engines, another engine disposed diametrically opposite to the failed engine with respect to the center of gravity may be switched off on purpose, and the remaining at least four engines will be capable of balancing the aircraft with sufficient reliability. In particular, such balancing will be possible without one of the remaining engines increasing its thrust significantly more than others of the remaining engines. Instead, the additional thrust required due to the failure can be shared to equal parts by all remaining engines and an overload of the one of the engines can be avoided. In order to limit complexity and costs of the aircraft, the number of engines may be limited to sixteen engines, preferably 12 engines. By using six, eight or ten engines, an optimum number can be achieved which balances safety and costs.

According to a third aspect of the present invention, a vertical takeoff and landing aircraft (VTOL aircraft) is provided, which comprises at least four engines, each of the engines being mounted to the aircraft such as to be movable, preferably pivotable, between a hover position with vertical thrust direction and a cruise position with horizontal thrust direction, and which further comprises at least one fuselage engine mounted at a fuselage of the aircraft and having substantially vertical thrust direction. According to this aspect, four movable engines are combined with at least one engine disposed at the fuselage of the aircraft, which has a vertical thrust direction and therefore is used for hovering such as during takeoff and landing. In this manner, the aircraft of the third aspect can make use of at least five engines during hovering such as to achieve sufficient redundancy in case of an engine failure. In particular, in case of an engine failure, the remaining four engines may still be able to reliably balance the aircraft.

Fuselage engines according to embodiments of all aspects of the present invention may be integrated within the fuselage, such as to be disposed in a recess or through hole within the fuselage, or may be attached to an outside wall of the fuselage. Fuselage engines may also be partially integrated within the fuselage or may be movable between an active positon outside the fuselage and an inactive position within the fuselage.

Meanwhile, during cruise flight, the fuselage engine may be inoperative as additional redundancy is not required in this situation. Since the fuselage engine is disposed at the fuselage of the aircraft, in particular within the fuselage, drag can be reduced during cruise flight. This concept utilizes the fact that the overall thrust required during cruise flight is much lower than the overall thrust required during hovering, and therefore the number of engines necessary for cruise flight may be reduced. If one of the engines is disposed within the fuselage of the aircraft, the inoperative engine during cruise flight may not contribute to the overall drag of the aircraft.

It is noted that the VTOL aircraft according to the third aspect of the invention may be configured as a VTOL aircraft according to a second aspect of the present invention and/or may use a wing structure of the first aspect of the present invention.

A VTOL aircraft according to the third aspect of the present invention may preferably comprise at least two fuselage engines mounted at the fuselage of the aircraft, wherein, with respect to a heading direction X of the aircraft, one of the fuselage engines is positioned in front of the center of gravity of the aircraft, and another one of the fuselage engines is positioned behind the center of gravity of the aircraft. In this manner, the vertical thrust provided by the fuselage engines may be balanced with respect to the center of gravity. In addition, if one of the two fuselage engines fails, the other fuselage engine may be switched off on purpose in to avoid any asymmetric thrust from the fuselage engines, while the balance of the aircraft may be maintained through the four engines mounted to the wings. All four wing engines may provide the additional thrust required due to inoperative fuselage engines at equal shares.

In a further embodiment of the present invention, the VTOL aircraft comprises at least two fuselage engines mounted at the fuselage of the aircraft, wherein, with respect to a heading direction X of the aircraft, one of the fuselage engines is positioned in front of the center of gravity of the aircraft, and another one of the fuselage engines is positioned behind the center of gravity of the aircraft.

This configuration further enhances redundancy of thrust during hovering and supports stabilizing the aircraft with respect to a rolling direction. Again, in case of a failure of one of the fuselage engines, the other fuselage engine may be switched off as well, to avoid asymmetric thrust through the fuselage engines, while balance is maintained through the four wing engines. If redundancy is to be improved further, in another embodiment of the present invention, four fuselage engines are provided at the fuselage of the aircraft which are disposed around the center of gravity of the aircraft, for example in the corners of a horizontal rectangle.

According to a fourth aspect of the present invention, the above-mentioned object is achieved by a vertical takeoff and landing aircraft (VTOL aircraft), comprising at least four engines formed by electric ducted fans, each of the engines being mounted to the aircraft such as to be movable, preferably pivotable, between a hover position with vertical thrust direction and a cruise position with horizontal thrust direction, wherein at least two of the engines are mounted to a left wing of the aircraft and at least two other of the engines are mounted to a right wing of the aircraft, wherein the at least four engines are separately mounted on different mounting portions distributed along the extension of the respective wing, such as to move between hover position and cruise position as single engines.

Thus, according to the fourth aspect, a VTOL aircraft is provided comprising at least four electric ducted fans, which are separately mounted on different mounting portions. Conventionally, when using electric ducted fans as propulsion devices for an aircraft, in order to ensure sufficient thrust, either a larger number of relatively small engines are grouped together as a package and mounted using a common housing to the aircraft, or only a low number of relatively large engines are mounted to a fuselage of the aircraft. The invention of the fourth aspect provides a novel combination of both concepts by providing a plurality of wing engines, which are mounted separately from one another to a wing. In particular, on the one hand, the number of engines may be reduced to use a few larger engines enabling less parts, low noise, high efficiency and low footprint, while on the other hand, at least four engines are distributed along the wings in order to achieve distribution of thrust in span direction. Furthermore, the use of a limited number of separate engines increases design flexibility and allows an aircraft designer to use a desired number of engines of equal size to equip different types of aircrafts having different length, span and weight.

In a preferred embodiment, the VTOL aircraft of the fourth aspect of the invention may be a VTOL aircraft of the second and/or third aspect of the invention. Furthermore, in an embodiment of the fourth aspect of the invention, a wing structure according to the first embodiment of the invention may be used.

In all aspects of the present invention, there may be at least one engine mounted to the aircraft at a position having an X coordinate defined along the heading direction X of the aircraft, which is equal to an X coordinate of a center of gravity of the aircraft. In other words, such an engine may be disposed on a lateral axis (Y axis), which includes the center of gravity when viewed in a projection into a horizontal plane. For example, such an engine may be disposed on a tip of a wing or within a fuselage portion of the aircraft near or at the center of gravity. In such a configuration, failure of the engine does not impair stability of the aircraft with respect to rotation about the pitch axis.

Due to the increased safety according to the invention, a VTOL aircraft according to any of the aspects of the present invention is preferably adapted to carry at least one human passenger, preferably plurality of passenger (including at least one pilot), more preferably more than 6 passengers.

In another embodiment of the present invention, which may be applied to all of the aspects of the present invention, a VTOL aircraft may comprise a wing-folding mechanism for folding at least one wing of the aircraft between an unfolded position and a folded position, wherein a span of the aircraft in the unfolded position is larger than in the folded position. In such an embodiment, a wing may preferably include a base portion attached to a fuselage of the aircraft and a tip portion movably attached to the base portion at a position distant from the fuselage. The tip portion may be rotatable between the unfolded position and the folded position, in particular around a wing-folding axis that is running in parallel with or inclined to the heading direction of the aircraft, wherein in the unfolded position a wing surface of the tip portion is substantially parallel to a wing surface of the base portion and in the folded position the wing surface of the tip portion is oriented at an angle, preferably at substantially 90°, with respect to the wing surface of the base portion. Alternatively, the tip portion is slidably mounted with respect to the base portion such as to be able to slide in the direction parallel to a wing extension direction and thus to increase or reduce the span of the aircraft.

The aircraft may be operated to assume the unfolded position during cruise flight and to assume the folded position during parking and/or during takeoff and/or during landing and/or during hovering. In this way, footprint of the aircraft is reduced and the aircraft of this embodiment is therefore particularly suitable for parking, takeoff and landing in an area or limited size, such as an urban area, while having strong cruise flight capabilities and long-range efficiency at the same time.

Preferred embodiments of the present invention will now be described in more detail with respect to the drawings, in which:
- Fig. 1: shows a top view of an aircraft of a first embodiment of the present invention;
- Fig. 2: shows a cross-sectional view of the aircraft of the first embodiment according to line II-II in Fig. 1;
- Fig. 3: shows a first variant of an engine that may be used in an aircraft according to embodiments of the present invention, according to line III-III in Fig. 1;
- Fig. 4: shows a second variant of an engine that may be used in an aircraft according to embodiments of the present invention, according to line III-III in Fig. 1;
- Fig. 5: shows a top view of a aircraft according to a second embodiment of the present invention;
- Fig. 6: shows an engine that may be used in an aircraft of the second embodiment;
- Figs. 7-14: show top views of aircrafts according to the third to tenth embodiments of the present invention;
- Fig. 15: shows a front view of an aircraft according to an eleventh embodiment of the present invention.

Throughout the present disclosure, directions usually refer to a situation when the aircraft is parking or flying parallel to the ground. This means, a heading direction X of the aircraft extends along the longitudinal axis (roll axis) of the aircraft in horizontal forward direction, a lateral direction Y extends horizontally along a lateral axis (pitch axis) of the aircraft, and a vertical direction Z extends upwards along a vertical axis (yaw axis) of the aircraft. A vertical median plane L is defined to extend in heading direction X and in vertical direction Z (orthogonal to the lateral axis) and contains a center of gravity CG of the aircraft.

A VTOL aircraft 10 according to the first embodiment of the present invention comprises a fuselage 12 that contains a cabin 14 for accommodating at least one person, for example a pilot and/or a passenger, and a wing structure with a left wing 16L and a right wing 16R as well as a plurality of engines 18 attached to the wings 16L, 16R, respectively. Aircraft 10 may further include other components known as such in conventional aircrafts, such as an elevator 20 or landing gears (not shown), for example.

Left wing 16L extending from a left portion of the fuselage 12 carries a first engine 18L-1 mounted to a leading edge 22 of left wing 16L, and a second engine 18L-2 mounted to a trailing edge 24. Therefore, with respect to a wing centerline 26, which extends in wing extension direction (substantially in lateral direction Y) through a center of the wing between leading edge 22 and trailing edge 24, the first engine 18L-1 is located closer to the leading edge 22 than to the wing centerline 26, whereas the second engine 18L-2 is located closer to the trailing edge 24 than to the wing centerline 26.

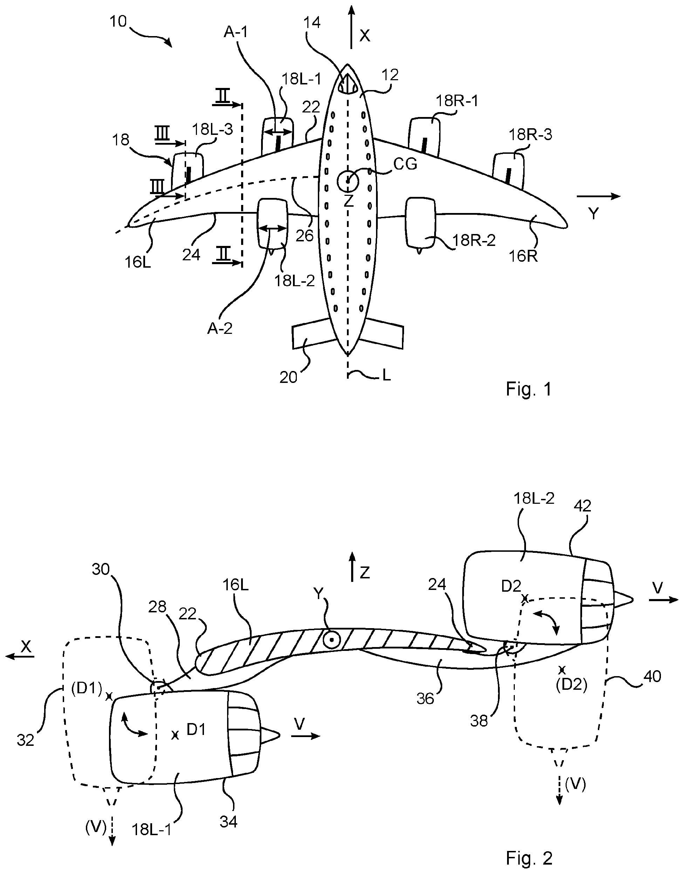

Furthermore, it can be seen that in a projection of the first and second engines 18L-1, 18L-2 into a horizontal XY plane, which corresponds to the view in Fig. 1, first and second engines 18L-1, 18L-2 have substantially the same distance from the vertical median plane L. More particularly, an aerodynamic cross-section A-1 of the first engine 18L-1 overlaps an aerodynamic cross-section A-2 of the second engine 18L-2 with respect to the lateral direction Y. In other words, in a projection of the aircraft 10 in the horizontal XY plane, the first engine 18L-1 is disposed in front of the second engine 18L-2.

Fig. 2 illustrates the attachment of first and second engines 18L-1, 18L-2 to the leading edge 22 and the trailing edge 24, respectively. As can be seen in Fig. 2, a front bracket 28 may be provided fixedly attached or integrally with the leading edge 22 of wing 16L, such as to extend in the forward direction (heading direction X) from the leading edge 22. Arranged at a front end of front bracket 28 may be a first engine mounting portion 30 at which the first engine 18L-1 is mounted such as to be pivotable with respect to the left wing 16L between a hover position indicated in dashed lines 32 in Fig. 2, in which a thrust direction V (airflow direction) of the engine 18L-1 is oriented vertically in downward direction, and a cruise position indicated by solid lines 34, in which the thrust direction V is oriented horizontally in reverse direction. Thus, at the first engine mounting portion 30, the first engine 18L-1 is mounted to be pivotable by about 90°.

Furthermore, a rear bracket 36 may be fixedly attached or integrally with the trailing edge 24 of wing 16L, so as to extend in reverse direction (opposite to the heading direction X). At a rear end of a rear bracket 36, the second engine 18L-2 may be mounted via a second engine-mounting portion 38 such as to be pivotable by substantially 90° between a hover position indicated by dashed lines 40 in which the thrust direction V is oriented vertically in downward direction, and a cruise position indicated by solid lines 42, in which the thrust direction V is oriented horizontally in reverse direction.

Pivotable movement of the first and second engines 18L-1, 18L-2 between hover position and cruise position may be actuated by an actuator (not shown), preferably including an electric motor. Preferably, both engines 18L-1, 18L-2 are actuated by the same electric actuator, such as to reduce the complexity and the number of parts required.

The pivot axis of the first engine-mounting portion 30 and/or the pivot axis of the second engine mounting-portion 38 are preferably oriented in lateral direction Y. As can be seen in Fig. 2, front and rear brackets 28, 36 may be formed to allow positioning the first and second engine-mounting portions 30, 38 before the leading edge 22 and behind the trailing edge 24, respectively.

As can further be seen in Fig. 2, according to the illustrated first embodiment, when pivoting the engines 18L-1, 18L-2 starting from the hover position as indicated by dashed lines 32, 40, first engine 18L-1 is swung downwardly such that a center of gravity D1 of the first engine 18L-1 is lowered, whereas the second engine 18L-2 is swung upwardly such that a center of gravity D2 is raised. This configuration has two advantages. First, the energy for pivoting both engines 18L-1, 18L-2 may be reduced, for example by mechanically coupling the actuating mechanisms of both engines, because the sum of the potential energies of both engines 18L-1, 18L-2 may remain substantially constant in hover and cruise position. Second, in cruise position, the engines 18L-1, 18L-2 are offset in vertical direction such that interference between the airflows of the engines can be avoided. In particular, in cruise position, second engine 18L-2 is disposed at a higher level in vertical direction Z than first engine 18L-1. More particularly, as can be seen in Fig. 2, in cruise position, the first engine 18L-1 is positioned below the wing 16L, whereas the second engine 18L-2 is positioned above the wing 16L. Accordingly, the exhaust air stream of first engine 18L-1 may flow below the wing 16L without obstruction, whereas the second engine 18L-2 may receive an intake air streaming from above the wing 16L without obstruction.

As can be seen in Fig. 1, left wing 16L may additionally carry a third engine 18L-3 mounted to a separate mounting portion on the wing 16L at a distance from first and second engines 18L-1, 18L-2, in particular at a larger distance from fuselage 12 as compared to the first and second engines 18L-1, 18L-2. In the particular example of the first embodiment, left wing 16L therefore may carry three engines 18L-1, 18L-2, 18L-3.

The right wing 16R may be configured in a corresponding manner as the left wing 16L, i.e. with three engines 18R-1, 18R-2, 18R-3 positioned symmetrically to the three engines 18L-1, 18L-2, 18L-3 with respect to the vertical median plane L of the aircraft 10, such that a redundant engine arrangement having six engines in total is obtained. This means that in case of a failure of one of the engines, there is always one engine positioned diametrically opposed to the failed engine with respect to the center of gravity CG, which may then be switched off on purpose as well, with the result that the remaining four engines are still arranged such as to surround the center of gravity CG and can therefore easily balance the aircraft 10. For example, if first engine 18L-1 of left wing 16L fails, second engine 18R-2 of right wing 16R, which is disposed diametrically opposite to the failed engine 18L-1 with respect to the center of gravity CG, may be switched off on purpose by the onboard flight control system, wherein the remaining engines 18L-2, 18L-3, 18R-1 and 18R-3, which remain operative, are still distributed around the center of gravity CG and can therefore maintain balance of the aircraft 10. In another example, if the third engine 18R-3 of the right wing 16R fails, the third engine 18L-3 of the left wing 16L, which is diametrically opposite to the failed engine 18R-3 with respect to the center of gravity CG of the aircraft 10, may be switched off, such that the remaining four engines 18L-1, 18L-2, 18R-1, 18R-2, which remain operative, are still distributed such as to surround the center of gravity CG of the aircraft 10 and will be able to easily keep the balance of the aircraft 10.

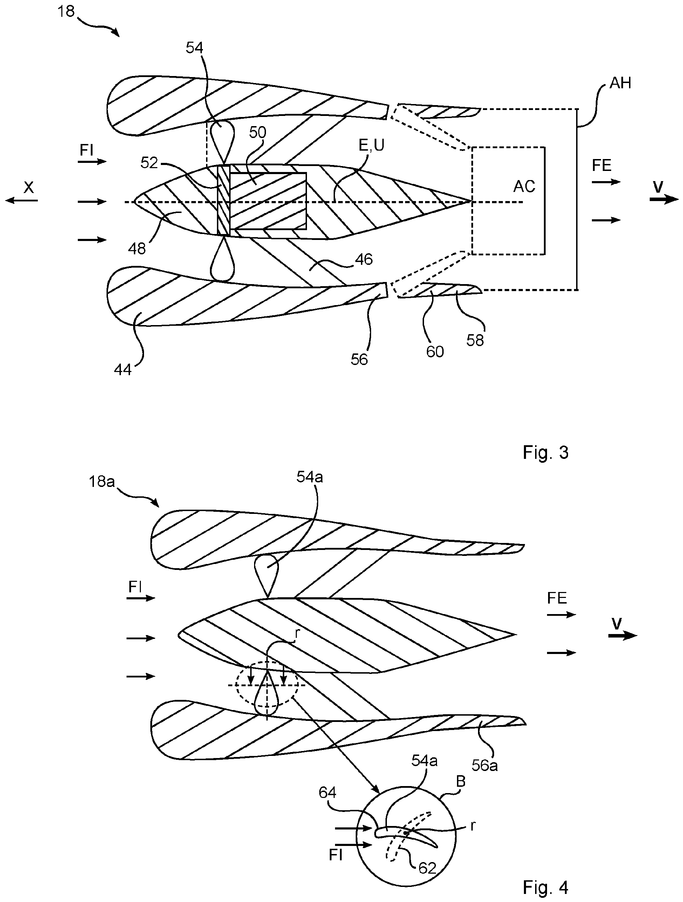

The engines 18 are preferably electric ducted fans and all engines 18 of aircraft 10 may have equal configurations and specifications. Fig. 3 shows a first variant of one of the engines in a cross-sectional view according to line III-III in Fig. 1. Engine 18 comprises a substantially cylindrical duct 44 defining a central engine axis E corresponding to the thrust direction V. An inner surface of duct 44 is preferably designed to optimize air flow characteristics and reduce noise of the engine 18. For example an acoustic liner may be attached to the inner surface which absorbs sound of specific frequencies, for example a porous material or a reactive silencer based on the Helmholz resonator principle. The outer surface of duct 44 may be designed to assist lift such that the engine forms part of the lifting structure of the aircraft, together with the wings.

Engine 18 further comprises a stator 46 fixed to duct 44, which carries a hub portion 48 at the center of duct 44. Hub portion 48 includes an electric motor 50, which drives a rotor 52 for rotation about engine axis E. Rotor 52 includes rotor blades 54 extending between the hub portion 48 and the inner surface of duct 44, such that rotation of the blades 54 propels an intake airflow FI in thrust direction V through the engine 18. The airflow exits the engine 18 at an exhaust portion 56 of the duct 44 to form an exhaust airflow FE.

In the first variant of the engine 18 shown in Fig. 3, a variable area exhaust nozzle 58 is attached to the exhaust portion 56 of duct 44, which includes at least one movable jaw 60, for example a plurality of jaws 60 rotatably mounted to exhaust portion 56. Exhaust nozzle 58 can thus be moved to define different exhaust areas, in particular a cruise exhaust area AC when set to a closed or cruise configuration, and a hover exhaust area AH when set to an open or hover configuration. By changing the exhaust area between AC and AH, the static pressure at the exhaust portion 56 is varied and therefore the aerodynamic characteristics can be adapted in cruise and hover mode. The engine 18 may therefore efficiently be operated as desired, in particular at about the same operating point and/or similar flow conditions during both cruise and hover flight.

The exhaust nozzle 58 may be operated between cruise configuration and hover configuration in accordance with the operational mode of the aircraft 10 and in particular in accordance with the pivoting movement of the engine 18 between cruise position with horizontal thrust direction V and hover position with vertical thrust direction V. The exhaust nozzle 58 may be provided with a separate actuator for actuating operation of the jaws 60, for example by means of an electric motor. The actuator may further be electronically coupled to an actuator, which actuates the pivoting movement of the engine 18 around the engine-mounting portion 30, 38. Alternatively, the same actuator may be used for actuating the pivoting movement of engine 18 and the operation of exhaust nozzle 58.

Fig. 4 shows a second variant of an engine 18 suitable for an aircraft of the present invention, for example the aircraft 10 of the first embodiment. Only the differences of the second variant with respect to the first variant are described in more detail and reference is made to the description of the first variant for all other features and functions. In the second variant, a variable area exhaust nozzle as used in the first variant may be omitted and the exhaust portion 56a may have a constant exhaust area in both hover mode and cruise mode. Furthermore, at least one, preferably all of the rotor blades 54a may be movable such as to change an inclination of the blades with respect to the intake airflow FI as shown in the enlarged drawing B in Fig. 4. In particular, in cruise mode, an angle between the blades and the intake airflow FI may be larger as depicted in dashed lines 62 in the enlarged drawing B, whereas in hover mode, an angle between the intake airflow FI and the blades may be smaller as shown in solid lines 64 in the enlarged drawing B. For changing the angle, blades 54a may be mounted to be rotatable around their longitudinal axis r, which may be a radial axis with respect to the central engine axis E.

By changing the angle between the blades 54a and the intake airflow FI as described above, the static pressure within engine 18a may be changed and thus, the engine 18 may efficiently be operated at about the same operating point and/or similar flow conditions during both cruise and hover flight. Again, movement of the rotor blades 54a between cruise mode and hover mode may be driven by an actuator (not shown) in conjunction with the pivotable movement of engine 18a.

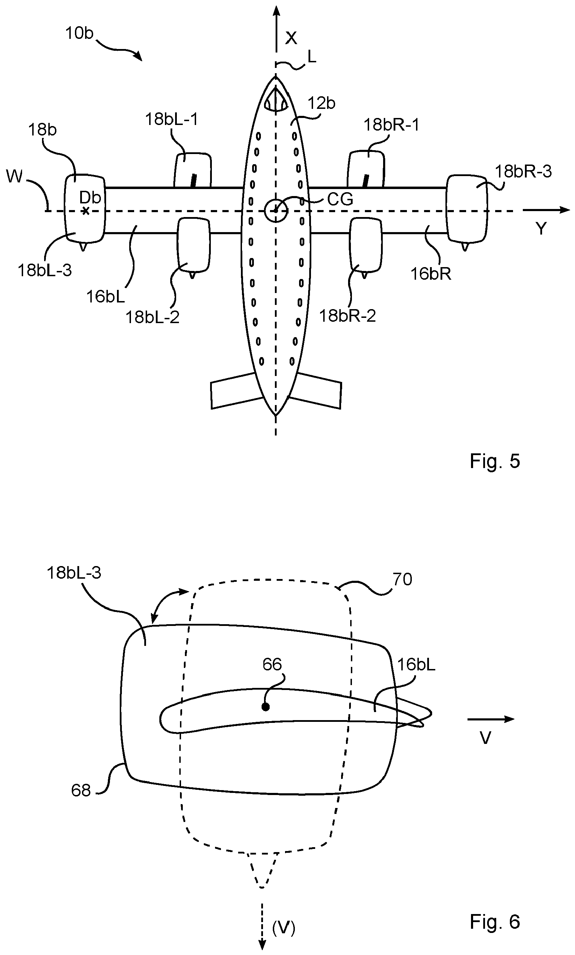

Figs. 5 and 6 show a second embodiment of the present invention, which is a modification of the first embodiment described above. Therefore only the differences with respect to the first embodiment will be described in more detail, and reference should be made to the description of the first embodiment for all other features and functions.

Aircraft 10b of the second embodiment comprises six engines 18b, wherein three engines 18bL-1, 18bL-2, 18bL-3 are mounted to a left wing 16bL and three engines 18bR-1, 18bR-2, 18bR-3 are mounted to a right wing 16bR. First and second engines 18bL-1, 18bL-2 and 18bR-1, 18bR-2 of left and right wings 16bL and 16bR, respectively, are each configured as engine pairs mounted aligned to one another at substantially the same distance from the vertical median plane L of aircraft 10b, corresponding to the configuration described above with respect to Fig. 2. The third engines 18bL-3 and 18bR-3 are mounted to the tip ends of the wings 16bL, 16bR, respectively, such that their X coordinate (position along heading direction X) is substantially equal to the X coordinate of the center of gravity CG. In the present example, wings 16bL and 16bR extend substantially orthogonally from fuselage 12b in opposite lateral directions, such that a central line W of wings 16bL and 16bR runs through the third engines 18bL-3, 18bR-3.

Fig. 6 shows a pivotable mounting of the third engines 18bL-3, 18bR-3 by taking the third engine 18bL-3 of the left wing 16bL as an example. As can be seen in Fig. 6, engine 18bL-3 is mounted such as to be pivotable around an engine-mounting axis 66, which runs in lateral direction Y. Engine-mounting axis 66 may be aligned with the wing central line W and may in particular point towards the center of gravity CG of the aircraft 10b. Furthermore, the engine-mounting axis 66 may run through the center of gravity Db of the engine 18bL-3. In this manner, engine 18bL-3 is pivotable between a cruise position shown in solid lines 68, in which the thrust direction V is oriented horizontally in reverse direction, and a hover position shown in dashed lines 70, in which the thrust direction V is oriented vertically downwards.

Due to the arrangement of six engines 18b around the center of gravity CG of aircraft 10b, the advantages as described above for the first embodiment with regard to the redundancy of the thrust in case of engine failure is achieved in the second embodiment as well.

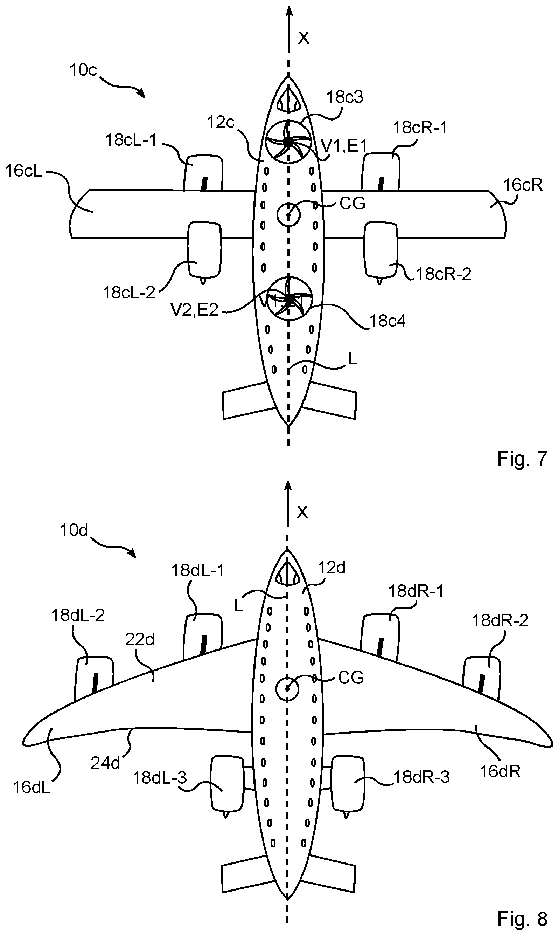

Fig. 7 shows a third embodiment of the present invention, which again is a modification of the first embodiment described above, such that only the differences with respect to the first embodiment will be described in more detail, whereas reference is made to the description of the first embodiment for all other features and functions.

In the third embodiment, aircraft 10c comprises two fuselage engines, in particular a front fuselage engine 18c-3 and a rear fuselage engine 18c-4, which are integrated in the fuselage 12c of aircraft 10c, such as to have vertical thrust directions V1 and V2, respectively. With respect to the heading direction X, the front fuselage engine 18c-3 is positioned in front of the center of gravity CG of aircraft 10c, whereas the rear fuselage engine 18c-4 is positioned behind the center of gravity CG of aircraft 10c. Preferably, the central engine axes E1 and E2 of the fuselage engines 18c-3, 18c-4 (the rotational axes of the rotors of the engines) are positioned to be contained in the vertical median plane L of aircraft 10c.

The fuselage engines 18c-3, 18c-4 may have the same configurations and specifications as the remaining engines mounted to the wings, wherein the fuselage engines 18c-3, 18c-4 will usually not be pivotally mounted, but will have fixed thrust directions V1, V2 and will only be operative during hovering.

Aircraft 10c may again have six engines, namely the two fuselage engines 18c-3, 18c-4a, a pair of left engines 18cL-1, 18cL-2 and a pair of right engines 18cR-1, 18cR-2, wherein the pairs of left and right engines are all mounted preferably in a manner corresponding to that described above with respect to Fig. 2, such as to have the same distance from the vertical median plane L of aircraft 10c. In this manner, the six engines are arranged around the center of gravity CG and therefore achieve the same advantages as described above for the first embodiment with respect to redundancy in case of engine failure.

Fig. 8 shows a fourth embodiment of the present invention, which again is a modification of the first embodiment, such that only the differences with respect to the first embodiment will be explained in more detail, whereas reference is made to the description of the first embodiment with respect to all other features and functions.

In the fourth embodiment, left wing 16dL carries a first engine 18dL-1 and a second engine 18dL-2, wherein the second engine 18dL-2 has a larger distance from the vertical median plane L of the aircraft 10d than the first engine 18dL-1. Both engines 18dL-1, 18dL-2 are preferably mounted to a leading edge 22d of the left wing 16dL, whereas at the trailing edge 24d, there are preferably no engines. The right wing 16dR is configured in a corresponding manner with first and second engines 18dR-1, 18dR-2 mounted at different distances from the vertical median plane L of aircraft 10d to the leading edge of wing 16dR.

In addition, a left third engine 18dL-3 is mounted to a left rear portion of fuselage 12d, and a right third engine 18dR-3 is mounted to a right rear portion of the fuselage 12d. The third engines 18dL-3, 18dR-3 are thus mounted to the fuselage 12d at positions behind the wings 16dL, 16dR and preferably above the wings 16dL, 16dR.

All six engines of the aircraft 10d are preferably pivotally mounted to the wings and the fuselage, respectively, such as to be pivotable between a hover position with vertical thrust direction and a cruise position with horizontal thrust direction. As can be seen in Fig. 8, the six engines 18d are again arranged around the center of gravity CG of aircraft 10d, such that the same advantages are achieved with respect to redundancy of thrust in case of engine failure as described above with reference to the first embodiment of the invention.

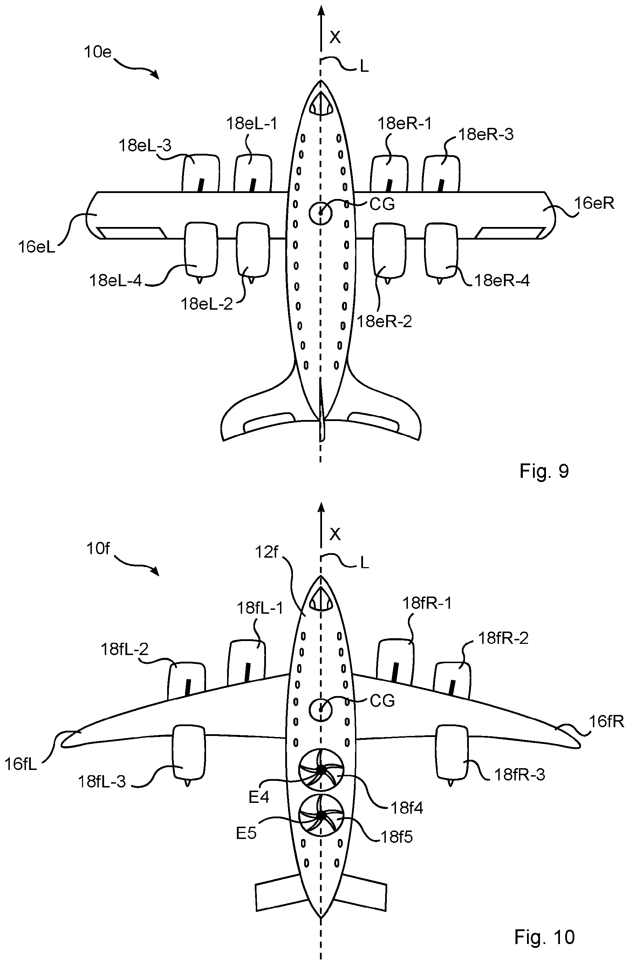

Fig. 9 shows a fifth embodiment of the present invention, which again is a modification of the first embodiment described above, such that only the differences with respect to the first embodiment are described in more detail, whereas reference is made to the description of the first embodiment with respect to all other features and functions.

An aircraft 10e of the fifth embodiment comprises a total of eight engines, wherein left first and second engines 18eL-1, 18eL-2 are mounted as an inner pair to a left wing 16eL, and left third and fourth engines 18eL-3, 18eL-4 are mounted as an outer pair to the left wing 16eL. The engines 18eL-1, 18eL-2 of the inner pair are mounted at the same distance from the vertical median plane L of the aircraft 10e, for example with a configuration according to Fig. 2. The engines 18eL-3, 18eL-4 of the outer pair are also mounted at the same distance from the vertical median plane L of the aircraft 10e, whereas the distance is larger than that of the inner pair of engines 18eL-1, 18eL-2. In this manner, each of the pairs has a front engine 18eL-1, 18eL-3 mounted to a leading edge of the wing 16eL, and a rear engine 18eL-2, 18eL-4 mounted to a trailing edge of wing 16eL. Furthermore, as in the previous embodiments, each engine 18eL-1, 18eL-2, 18eL-3, 18eL-4 is mounted to wing 16eL at its own mounting portion, which is separate from the mounting portions of the other engines.

Right wing 16eR is configured with four right engines 18eR-1, 18eR-2, 18eR-3, 18eR-4, which are mounted in an arrangement that is symmetric to the arrangement of the left engines 18eL-1, 18eL-2, 18eL-3, 18eL-4 with respect to central median plane L.

All engines 18e of the aircraft 10e are preferably pivotally mounted (at their respective individual mounting portions) to the wings 16eL and 16eR, respectively, such as to be pivotable between cruise position with horizontal thrust direction and hover position with vertical thrust direction. Furthermore, as can be seen in Fig. 9, the engines are arranged around the center of gravity CG and therefore allow a redundant operation to increase safety in case of an engine failure. By increasing the number of engines from six to eight as compared to the previous embodiments, the additional thrust which is to be supplied by the remaining engines in case of an engine failure of one of the engines and purposely switching off of a second engine disposed diametrically opposite to the failed engine, can be reduced. At the same time, in view of the symmetry of the arrangement, the additional thrust required in such case can be provided by the remaining engines at equal shares, such that an overload of one or some of the engines can be avoided reliably.

Fig. 10 shows a sixth embodiment of the present invention, which is a modification of the fifth embodiment described above with reference to Fig. 9, such that only the differences with respect to the fifth embodiment will be described in more detail and reference is made to the description above of the fifth embodiment and the first embodiment for all other features and functions.

In the sixth embodiment, two engines 18fL-1, 18fL-2 are mounted to the leading edge of left wing 16fL, one engine 18fL-3 is mounted to a trailing edge of the left wing 16fL, two engines 18fR-1, 18fR-2 are mounted to a leading edge of right wing 16fR, one engine 18fR-3 is mounted to a trailing edge of the right wing 16fR, and two fuselage engines 18f-4, 18f-5 are mounted at fuselage 12f of the aircraft 10f, in particular within fuselage 12f. One of the engines mounted to the leading edge, the second engine 18fL-2, is mounted at a distance from the vertical median plane L of aircraft 10f, which is equal to the distance from the vertical median plane L of the third engine 18fL-3 mounted to the trailing edge, and which is larger than the distance from the vertical median plane L of the first engine 18fL-1 mounted to the leading edge. Thus, engines 18fL-2, 18fL-3 are mounted as a pair corresponding to the arrangement of Fig. 2.

The engines 18fR-1, 18fR-2, 18fR-3 of the right wing 16fR are mounted in an arrangement that is symmetric to that of the engines 18fL-1, 18fL-2, 18fL-3 of the left wing 16fL with respect to vertical median plane L of the aircraft 10f. The fuselage engines 18f-4, 18f-5 are positioned such that their engine axes E4, E5 are contained in the vertical median plane L at different distances from the center of gravity CG of the aircraft 10f and behind the center of gravity CG with respect to the heading direction X.

As can be seen in Fig. 10, aircraft 10f of the sixth embodiment comprises eight engines positioned in an arrangement around the center of gravity CG, which ensures sufficient redundancy in case of an engine failure as described above. At the same time, the two engines 18f-4, 18f-5 can be configured as fuselage engines to be integrated into the fuselage 12f in order to reduce the drag of the aircraft 10f during cruise flight.

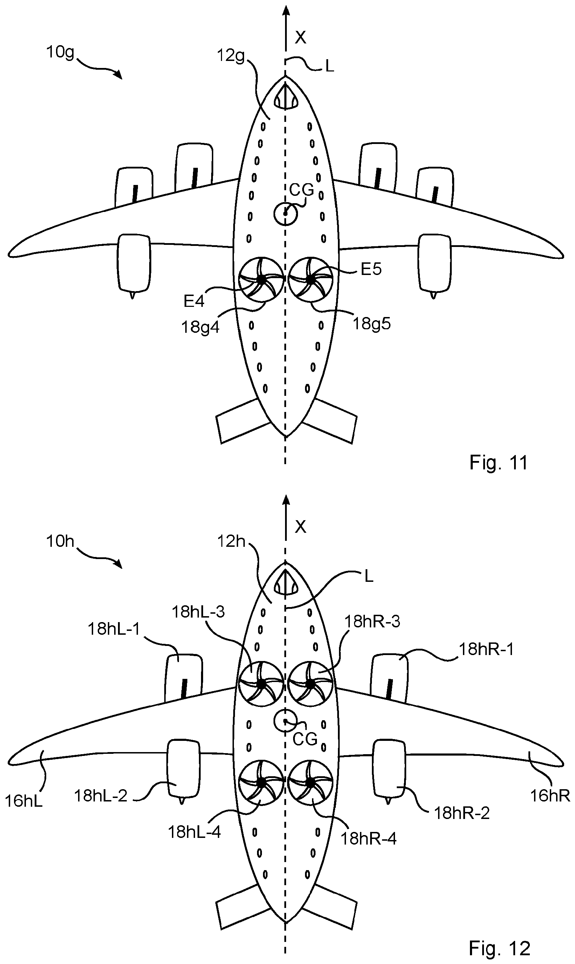

Fig. 11 shows a seventh embodiment of the present invention, which is a modification of the sixth embodiment described above, such that only the differences with respect to the sixth embodiment are described and reference is made to the description of the sixth embodiment and the first embodiment for all other features and functions.

In the seventh embodiment, two fuselage engines 18g-4, 18g-5 are provided in the fuselage 12g at positions behind the center of gravity CG of the aircraft 10f, however, not in a configuration one behind the other as in the sixth embodiment, but side by side, such that the central engine axes E4, E5 of the engines 18g-4, 18g-5 have the same distance from the center of gravity CG. This means that one of the engines, here engine 18g-4, is positioned on a left side of the vertical median plane L and the other engine, here engine 18g-5, is positioned on the right side of the vertical median plane L. This configuration provides the advantages of the sixth embodiment together with additional improvement of stability with respect to the rolling direction.

Fig. 12 shows an eighth embodiment of the present invention, which again is a modification of the first embodiment and the seventh embodiment of the present invention, such that only the differences with respect to the previous embodiments will be described in more detail, whereas reference is made to the description of the previous embodiments with respect to all other features and functions.

In the eighth embodiment, an aircraft 10h comprises a left wing 16hL carrying a left first engine 18hL-1 and a left second engine 18hL-2, which have the same distance from a vertical median plane L of the aircraft 10h and may be mounted to separate mounting portions at a leading edge and a trailing edge of the left wing 16hL, respectively, in accordance with the configuration of Fig. 2, for example. Symmetrically thereto, right wing 16hR may carry first and second engines 18hR-1, 18hR-2 mounted to the leading edge and the trailing edge, respectively, for example according to Fig. 2. Thus, the four wing engines 18hL-1, 18hL-2, 18hR-1, 18hR-2 form a rectangle around the center of gravity CG of the aircraft 10h when viewed in a projection into a horizontal plane.

Furthermore, four fuselage engines 18hL-3, 18hL-4, 18hR-3, 18hR-4 are positioned in the corners of a second rectangle surrounding the center of gravity CG of the aircraft 10h, such that left fuselage engines 18hL-3, 18hL-4 are positioned on a left side of the vertical median plane L in front of and behind the center of gravity CG, respectively, whereas right fuselage engines 18hR-3, 18hR-4 are positioned on the right side of the vertical median plane L in front of and behind the center of gravity CG, respectively.

A total of eight engines of aircraft 10h are therefore again positioned around the center of gravity CG, such as to provide redundancy in case of an engine failure. As an additional advantage, a total of four engines may be configured as fuselage engines in the eighth embodiment, such that the drag of the aircraft 10h during cruise flight can be reduced significantly, while sufficient thrust and redundancy is ensured during hovering.

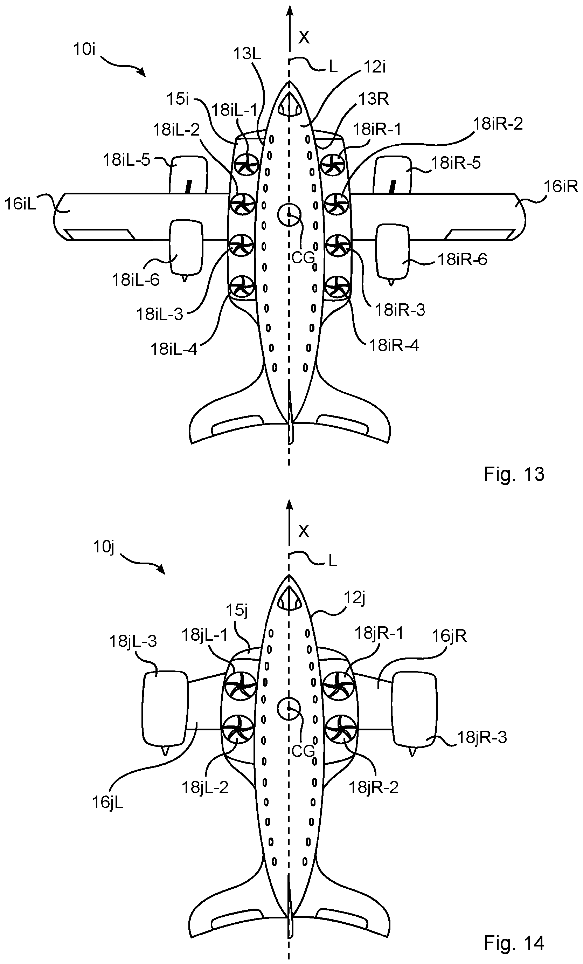

Fig. 13 shows an ninth embodiment of the present invention, which again is a modification of the first embodiment and the eigth embodiment of the present invention, such that only the differences with respect to the previous embodiments will be described in more detail, whereas reference is made to the description of the previous embodiments with respect to all other features and functions.

In the ninth embodiment, aircraft 10i comprises fuselage engines which are attached to left and right outer side walls 13L, 13R of a fuselage 12i, such as to be fixed with or integral with the fuselage 12i. Preferably, left and right outer side walls 13L, 13R of the fuselage 12i carry the same number of fuselage engines and, furthermore, with respect to a heading direction X of the aircraft 10i, the number of fuselage engines disposed before a center of gravity CG of the aircraft 10i equals the number of fuselage engines disposed behind the center of gravity CG of the aircraft 10i.

For example, four left fuselage engines 18iL-1, 18iL-2, 18iL-3, 18iL-4 are arranged in a row parallel to the heading direction X and attached to a left outer wall 13L of the fuselage 12i, and four right fuselage engines 18iR-1, 18iR-2, 18iR-3, 18iR-4 are arranged in a row parallel to the heading direction X and attached to a right outer wall 13R of the fuselage 12i.

The fuselage engines of the ninth embodiment may be accommodated within a common housing or carried by a common mounting structure 15i to be mounted to the fuselage 12i such as to reduce weight and drag, or they may be individually and separately mounted to the fuselage 12i for increased flexibility and accessibility.

In addition, aircraft 10i of the ninth embodiment may comprise two left wing engines 18iL-5, 18iL-6, and two right wing engines 18iR-5, 18iR-6, wherein both pairs are mounted preferably in a manner corresponding to that described above with respect to Fig. 2, such that both engines of each pair have the same distance from the vertical median plane L of aircraft 10i, respectively.

Fig. 14 shows an tenth embodiment of the present invention, which again is a modification of the first embodiment and the ninth embodiment of the present invention, such that only the differences with respect to the previous embodiments will be described in more detail, whereas reference is made to the description of the previous embodiments with respect to all other features and functions.

In the tenth embodiment, aircraft 10j again comprises fuselage engines 18jL-1, 18jL-2, 18jR-1, 18jR-2 which are attached, within a common housing/mounting structure 15j or individually/ separately, to left and right outer side walls of a fuselage 12j of the aircraft 10j, such as to be fixed with or integral with the fuselage 12j. In this example, each side of the fuselage 12j carries two fuselage engines, one (18jL/R-1) in front of the center of gravity and another one (18jL/R-2) behind the center of gravity CG, with respect to the heading direction X.

In addition, aircraft 10j of the tenth embodiment may comprise a left wing engine 18jL-3 and a right wing engine 18jR-3, which are mounted to the tip ends of left and right wings 16jL and 16jR, respectively, preferably in a manner corresponding to that described above with respect to Figures 5 and 6. Alternatively, pairs of wing engines in accordance with the embodiment shown in Figure 2 may be attached to the wings instead or in addition to the engines 18jL-3, 18jR-3.

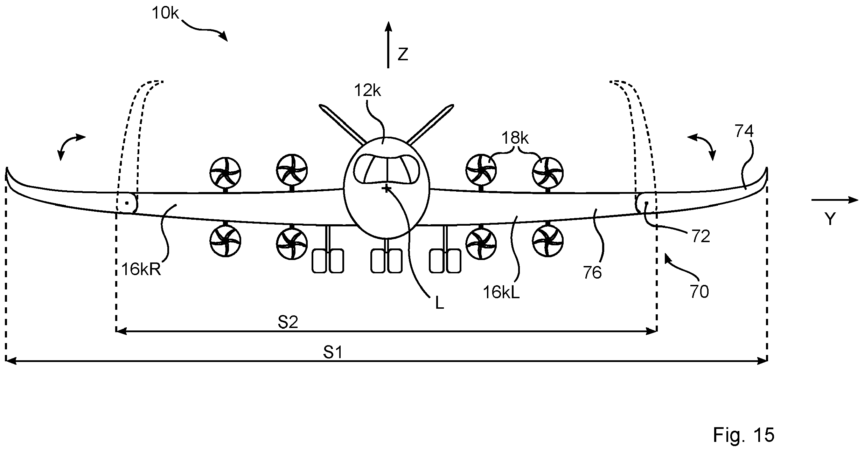

Fig. 15 shows an aircraft 10k according to an eleventh embodiment of the present invention, which comprises a wing-folding mechanism 70, which may be combined with each of the aircrafts 10-10j of the first to tenth embodiments described above or even with any other VTOL aircraft.

As can be seen in Fig. 15, at least one of two wings 16kL, 16kR of the aircraft 10k may be foldable by the wing-folding mechanism 70 such as to reduce the span of the aircraft 10k from a larger span S1 suitable for the cruise flight to a lower span S2 suitable for hover flight and/or parking, take-off or landing of the aircraft 10k. The wing-folding mechanism 70 may include a wing folding axis 72 at the wing, for example left wing 16kL, at a position outside of all engines, i.e. at a distance from a vertical median plane L of the aircraft 10k which is larger than that of all engines 18k mounted to the same wing 16kL. The wing-folding axis 72 may run in heading direction X. An actuator (not shown) may be provided to drive a pivot movement of a tip portion 74 of wing 17kL with respect to a base portion 76 of wing 17kL, which is attached to the fuselage 12k, around the wing-folding axis 72. In particular, tip portion 74 may swing upwardly such as to extend at an angle, for example at substantially 90°, with respect to the base portion 76 during hovering or during parking, take-off or landing.

## Claims

1. Wing structure for a vertical take-off and landing aircraft (10), comprising a wing (16) and at least two engines (18), each engine of the two engines being mounted to the wing (16) such as to be movable between a hover position with vertical thrust direction and a cruise position with horizontal thrust direction, wherein one of the two engines is mounted adjacent to a leading edge (22) of the wing and the other one of the two engines is mounted adjacent to a trailing edge (24) of the wing.

2. Wing structure of claim 1, wherein, in cruise position, one of the two engines (18) is positioned below the wing (16) and the other one of the two engines (18) is positioned above the wing (16).

3. Wing structure of claim 1 or claim 2, wherein both engines (18) are positioned substantially at the same distance from the fuselage (12) of the aircraft or substantially at the same distance from a vertical median plane (L) of the aircraft.

4. Wing structure of at least one of claims 1 to 3, wherein the two engines form a first pair of engines (18eL-1, 18eL-2), and wherein the wing structure further comprises at least one additional pair of engines (18eL-3, 18eL-4) mounted to the same wing (16eL) as the first pair of engines, each additional pair of engines being configured in the same or corresponding manner as said first pair of engines.

5. Wing structure of at least one of claims 1 to 4, wherein at least one of the engines is an electric ducted fan.

6. Wing structure of at least one of claims 1 to 5, wherein each engine (18) comprises a rotor (52), a stator (46) and at least one baffle member (58, 54a) movable with respect to both the rotor and the stator, such as to move between a hover configuration and a cruise configuration,
wherein the engine (18) comprises a baffle member (54a) configured as a blade of the rotor which is provided at an intake portion of the engine and/or a baffle member (58) configured as a variable area exhaust nozzle which is provided at an outlet portion (56) of the engine.

7. Vertical take-off and landing aircraft (10-10i), comprising a wing structure according to at least one of claims 1 to 6, wherein, with respect to the heading direction X of the aircraft, the engine mounted to the leading edge of the wing (16) is positioned in front of the center of gravity (CG) of the aircraft, and the engine mounted to the trailing edge of the wing (16) is positioned behind the center of gravity (CG) of the aircraft.

8. Vertical take-off and landing aircraft according to claim 7, comprising at least six engines.

9. Vertical take-off and landing aircraft, preferably according to claim 7, comprising at least four engines (18), each of the engines being mounted to the aircraft such as to be movable between a hover position with vertical thrust direction and a cruise position with horizontal thrust direction, and further comprising at least one fuselage engine (18c-3, 18c-4, 18f-4, 18f-5, 18g-4, 18g-5, 18hL-3, 18hL-4, 18hR-3, 18hR-4) mounted at a fuselage (12c, 12f, 12g, 12h) of the aircraft and having substantially vertical thrust direction.

10. Vertical take-off and landing aircraft according to claim 9, comprising at least two fuselage engines (18c-3, 18c-4, 18hL-3, 18hL-4, 18hR-3, 18hR-4) mounted at the fuselage of the aircraft, wherein, with respect to a heading direction X of the aircraft, one of the fuselage engines is positioned in front of the center of gravity (CG) of the aircraft, and another one of the fuselage engines is positioned behind the center of gravity (CG) of the aircraft.

11. Vertical take-off and landing aircraft according to claim 9 or claim 10, comprising at least two fuselage engines (18g-4, 18g-5, 18hL-3, 18hL-4, 18hR-3, 18hR-4) mounted at the fuselage of the aircraft, wherein one of the fuselage engines is positioned on a left side of a vertical median plane (L) of the aircraft, and another one of the fuselage engines is positioned on a right side of the vertical median plane (L) of the aircraft.

12. Vertical take-off and landing aircraft, preferably according to at least one of claims 7 to 11, the aircraft comprising at least four engines (18) formed by electric ducted fans, each of the engines being mounted to the aircraft such as to be movable between a hover position with vertical thrust direction and a cruise position with horizontal thrust direction, wherein at least two of the engines are mounted to a left wing of the aircraft and at least two other of the engines are mounted to a right wing of the aircraft, wherein the at least four engines are separately mounted on different mounting portions distributed along the extension of the respective wing and move between hover position and cruise position as single engines.

13. Vertical take-off and landing aircraft of at least one of claims 7 to 12, wherein each engine comprises a rotor, a stator and at least one baffle member movable with respect to both the rotor and the stator, such as to move between a hover position and a cruise position,
wherein the engine comprises at least one of a baffle member configured as a blade of the rotor which is provided at an intake portion of the engine and a baffle member configured as a variable area exhaust valve which is provided at an outlet portion of the engine.

14. Vertical take-off and landing aircraft according to at least one of claims 7 to 13, comprising at least one engine mounted to the aircraft at a position having an X coordinate defined along the heading direction X of the aircraft which is equal to an X coordinate of a center of gravity of the aircraft.

15. Vertical take-off and landing aircraft according to at least one of claims 7 to 14, comprising a wing-folding mechanism for folding at least one wing of the aircraft between an unfolded position and a folded position, wherein a span of the aircraft in the unfolded position is larger than in the folded position.

16. Vertical take-off and landing aircraft according to claim 15, wherein the wing includes a base portion attached to a fuselage of the aircraft and a tip portion movably attached to the base portion at a position distant from the fuselage, wherein the tip portion is movable with respect to the base portion, preferably rotatable between the unfolded position and the folded position such that in the unfolded position a wing surface of the tip portion is substantially parallel to a wing surface of the base portion and in the folded position the wing surface of the tip portion is oriented at an angle with respect to the wing surface of the base portion.
